# EUROPEAN PATENT APPLICATION

(11) **EP 2 189 821 A2**
(43) Date of publication of application: **26.05.2010**
(21) Application number: 09165689.2
(22) Date of filing: 16.07.2009
(51) Int. Cl.: G01V 15/00

(54) **Information locator**

(30) Priority: 21.11.2008 US 276026
(71) Applicant: Curtis, Guy P., San Diego, CA 92110 (US)
(72) Inventor: Curtis, Guy P., San Diego, CA 92110 (US)
(74) Representative: Gates, Marie Christina Esther

(57) **Abstract**

A system (10) and method for interrogating a plurality of different environments to locate an object within the environments includes a plurality of transceivers (14). A control unit (12) is also provided to selectively operate each transceiver while it is positioned in a respective environment. For operation of the system, an identification tag (24) is affixed to the object (22), and transmission of an interrogation signal (26) from a selected transceiver is accomplished at an inaudible high frequency. The tag is then responsive to the interrogation signal to send a return signal (28) back to the control unit via the transceiver. A follow-up search of the environment can be made with a hand-held mobile locator that electronically interacts with the tag to provide for a more precise location of the object in the environment.

## Description

### FIELD OF THE INVENTION

The present invention pertains generally to systems and methods for locating objects. More particularly, the present invention pertains to systems and methods for locating objects (targets) that may be in any one of a plethora of different environments, or in any of a plethora of different locations within a particular environment. The present invention is particularly, but not exclusively, useful as a system and method for simultaneously or sequentially searching different environments to ascertain the specific location of an object (target) within one of the environments.

### BACKGROUND OF THE INVENTION

When something has been lost or misplaced, finding it can often be time-consuming and, consequently, frustrating. Moreover, when the lost article is a necessary operational tool, the time spent searching for it is invariably detrimental to the operation. In emergency situations, the time that is wasted searching for an article (thing) may be unacceptable. At the very least, it may be inexpedient.

From a mathematical perspective, it is a simple task to find something that has been misplaced, has been lost, or is otherwise at an unknown location. It simply requires that the direction and distance from a known point to the unknown location of the target be somehow determined. From an engineering perspective, however, obtaining the necessary measurements to determine this direction and distance information can be problematic. In particular, the environment where the article (thing) has been lost will determine many of the operational requirements that are necessary for an effectively functioning locating system.

It often happens when something needs to be located that more than one environment may be involved. For example, consider a medical facility (e.g. a hospital) where many persons and things are constantly moving from one location to another, such as between or within wards, wings, and patient rooms. Not surprisingly, things get lost and misplaced. The problem is only amplified when the scope of search for the lost or misplaced object involves a large environment or, perhaps more troubling, when a plurality of different environments may be involved.

In light of the above, it is an object of the present invention to provide a system and method for locating an object that simultaneously or sequentially interrogates a plurality of different environments to determine whether a particular article, person or thing is present within one of the environments (e.g. hospital room). Another object of the present invention is to provide a system and method that measures direction and distance information within a defined environment to facilitate locating an object. Yet another object is to provide a systems analysis capability for operational environments. Another object of the present invention is to minimize the time spent looking for objects and, instead, use the time productively for improved operational efficiencies. Still another object of the present invention is to provide a system and method for interrogating an environment(s) to locate a lost or misplaced object wherein the system and method are easy to use, are simple to implement and are comparatively cost effective.

### SUMMARY OF THE INVENTION

In accordance with the present invention, a system for locating a tagged object within a plurality of environments includes a plurality of transceivers. Each transceiver is specifically located at a known point in a respective environment (e.g. a hospital room) and it is positioned to transmit an interrogation signal into the environment. Preferably, for purposes of the present invention, the interrogation signal has an inaudible high frequency that will interact with an identification tag or label that is somehow affixed to the object that is to be located. Preferably, the transceiver can be tuned to the tag or label in order to more specifically interact with the tag or label. In any event, with this interaction between the interrogation signal and the tag, a return signal is created that is directed back to the transceiver.

As intended for the present invention, the return signal that is directed from the object tag to the transceiver will include distance and direction information, relative to the transceiver, that is pertinent to the location of the tag (label) in the environment. Additionally, the return signal will include identifying information about the object to which it is affixed, such as what the object is and any pertinent date/time information. With this in mind, the present invention envisions that the object may be a patient chart, a personnel file, an administrative document, a mobile asset such as an IV stand, equipment, or even a person (e.g. a patient or health care personnel). Further, as also envisioned for the present invention, the tag can be periodically programmed to provide updated identifying information about the object to which it is affixed.

For one embodiment of the present invention, the return signal can be simply reflected from the tag. For another, the tag can include an emitter that, when triggered, will emit a return signal in response to the receipt of an interrogation signal. As for distance information contained in the return signal, this can be obtained in any of several well known ways. For instance, well known "sonar" techniques can be used. Further, the intensity of the return signal itself can be used as an indication of distance. An aspect of using signal intensity in the system is that the relatively limited signal range of an inaudible high frequency signal for the interrogation signal can actually help in localizing the search area, if desired.

For direction information contained in the return signal, any of several well known techniques can be used. In a simplified version of the present invention, the direction may need to include only azimuth data (i.e. an angle θ from a base azimuth). For a more sophisticated version, both azimuth (θ) and elevation information (i.e. an angle α from horizontal) may be used.

In operation, a central control unit is provided at a convenient place proximate the environment(s) to be interrogated by the system. An interrogation signal can then be transmitted into any or all of a plurality of selected environments. With the transmission of the interrogation signal, a return signal from the tagged object is created (i.e. generated or reflected) that can then be used to locate the lost or misplaced object.

For an alternate embodiment of the present invention, in addition to the components disclosed above, the system may include a hand-held mobile locator when a more precise indication of object location is required. More specifically, it may happen that there are a plethora of environments. Further, it may happen that the environment itself obscures the object (e.g. a file or chart in a file room). In such a situation it may be preferable to first locate the environment wherein the object (target) can be found, and then locate the object. The initial isolation of a particular environment can be accomplished generally in accordance with the disclosure provided above for the present invention. It may happen, however, that the direction and distance information in the return signal will unintentionally, or intentionally, not be useable. Nevertheless, the return signal may still be able to indicate that a misplaced object (target) is within a particularly defined environment, albeit without any precision.

As intended for the present invention, the mobile locator can be used whenever only the environment in which an object is present has been identified. Thus, with the knowledge that the correct environment has been identified, the mobile locator can be used to provide a more precise indication of the location of the object within the environment. To do this, the mobile locator electronically interacts with the tag in a manner similar to that disclosed above with reference to the transceiver and central control unit. In this case, however, the mobile locator needs to operate only within a predetermined distance of the object to be located. For example, the mobile locator should be able to electronically detect an identification tag when the distance between the tag and the mobile locator is in a range of less than approximately three feet. Preferably, the mobile locator can also be controlled to incrementally decrease its reception distance, to thereby determine with greater precision the location of the object.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Fig. 1 is a schematic diagram of the system of the present invention;
Fig. 2 is a perspective view of an exemplary environment for an operation of the present invention; and
Fig. 3 is a perspective view of another environment wherein an alternate embodiment of the present invention is being operated.

### DESCRIPTION OF THE PREFERRED EMBODIMENTS

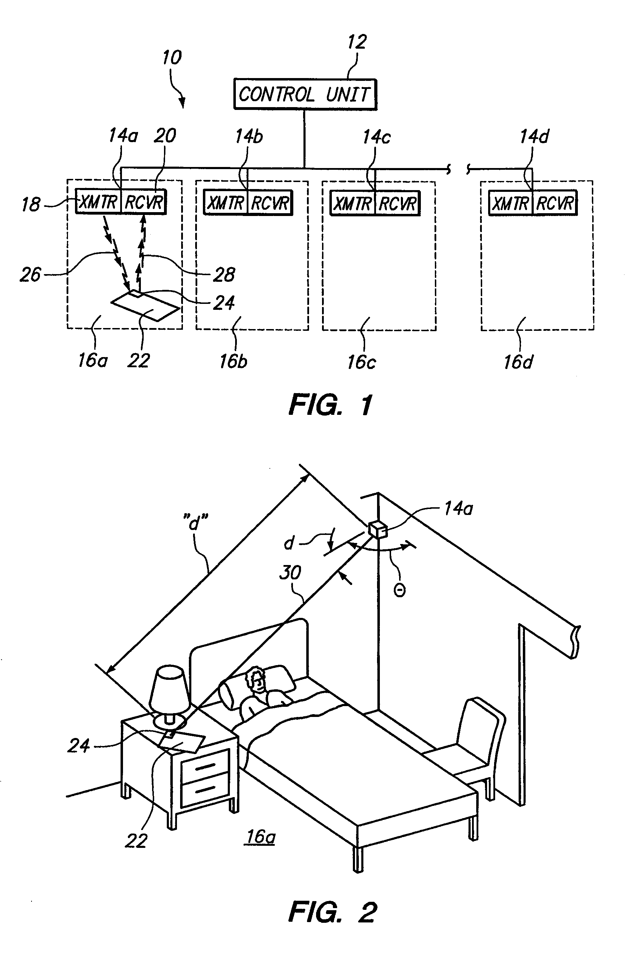

Referring initially to Fig. 1 a schematic representation of a system in accordance with the present invention is shown and is generally designated 10. There it will be seen that the system 10 includes a master control unit 12 that is electronically connected to a plurality of different transceivers 14a-d. Further, it is shown in Fig. 1 that each of the transceivers 14a-d is positioned in a respectively different environment 16a-d. For purposes of this disclosure, the various environments 16 shown are only exemplary. As will be appreciated by a skilled artisan, an environment 16 may be a room, a hall, an entire building or any other defined area.

In more detail, and using the transceiver 14a in the environment 16a as an example, it is seen that the transceiver 14a includes both a transmitter 18 and a receiver 20. This combination is noted here to indicate that the transmitter 18 and receiver 20 can be individually positioned in the environment 16a. Preferably, however, they are incorporated as a single unit (i.e. the transceiver 14a) and, accordingly, the description here will sometimes refer simply to the transceiver 14.

By way of example, Fig. 1 shows an object 22 in the environment 16a that for whatever reason may be temporarily lost or misplaced. Importantly, a tag (label) 24 is shown affixed to the object 22. Further, for purposes of the present invention, it is to be appreciated that the object 22 may be any type of article such as supplies (e.g. syringes, sponges and IV bags), or things such as a patient chart, a personnel file or some other type document that can be carried from one location to another. Further, the object 22 may also be a person such as a patient, physician, nurse or support staff. The object 22 may also be a mobile vehicle such as a crash cart, echo machine or respirator that is capable of moving, or being moved, from one location to another. Moreover, the object 22 will most likely be moveable between the different environments 16a-d, such as from the environment 16a to the environment 16c.

As indicated in Fig. 1, each transceiver 14a-d is able to transmit an interrogation signal 26 into its respective environment 16. Preferably, the interrogation signal 26 will have an inaudible high frequency carrier wave with a somewhat limited signal range. Nevertheless, the signal range needs to provide appropriate coverage for the environment 16 that is to be interrogated (monitored). In any event, when the interrogation signal 26 is incident on the tag 24, a return signal 28 is reflected from, or generated by, the tag 24. The return signal 28 is then transmitted from the tag 24 back to the transceiver 14 (receiver 20). From there (i.e. from the transceiver 14), the information contained in the return signal 28 is transmitted back to the control unit 12.

For the system 10 of the present invention, a return signal 28 will preferably include distance and direction information regarding the spatial relationship between the tag 24 (i.e. the object 22) and the particular transceiver 14 that initiated the return signal 28. Also, the return signal 28 can include specific identifying information about the object 22. For instance, the identifying information may include the nature of the object 22 (e.g., person, article or thing) as well as time/date information. It may also include information relative to the object 22 and its functionality in the environment 16.

Turning now to Fig. 2, the object 22 is shown in a typical environment 16a envisioned by the present invention (e.g. a patient room in a hospital). In particular, exemplary mathematical measurements required for locating the object 22 in the environment 16a are shown. Although spherical coordinates are used in this disclosure, it will be appreciated that other mathematical manipulations can be used for the system 10, such as Cartesian or Cylindrical coordinates. In this example, the line 30 identifies the spatial relationship between the transceiver 14 and the tag 24 (i.e. object 22). In detail, the line 30 is defined by a distance "d" and a direction from the transceiver 14 established by an elevation angle "α" and an azimuth angle "θ". Together, these three measurements, "d, α, and θ" comprise the direction and distance values included in the return signal 28 that are needed to locate the object 22 in the environment 16. As mentioned above, the return signal 28 will also include the necessary information for identifying the type, and specific nature of the object 22.

As envisioned for the system 10, the distance "d" can be determined in any of several well known ways. For one, the intensity of the return signal 28 can be used as an indicator of the distance "d". Recall, the signal range of the interrogations signal 26 may be limited. If so, this is a variation on the intensity of the return signal 28 that can be effectively used to localize the monitoring of a specific area. Another technique for determining the distance "d" can be the long used techniques associated with "sonar." In addition to the determination of distance "d", the interrogation signal 26 may also be tuned to a particular tag 24 or to a classification of tags 24.

In the operation of the system 10 of the present invention, an object 22 that has been lost or misplaced in any of the environments 16a-d can be found or located by activating the master control unit 12. Specifically, the control unit 12 can simultaneously interrogate all of the environments 16a-d with an interrogation signal 26, or it can selectively interrogate specific individual environments 16. In any event, the interrogation signal 26 is transmitted from a transceiver 14a-d into the respective environment 16a-d. The responsive return signal 28 will then provide several items of useful information. For one, the return signal 28 can isolate the specific environment 16 where the object 22 is located. It will also provide the distance and direction information (i.e. "d", "α", and "θ") that is necessary to locate the object 22 within the specific environment 16.

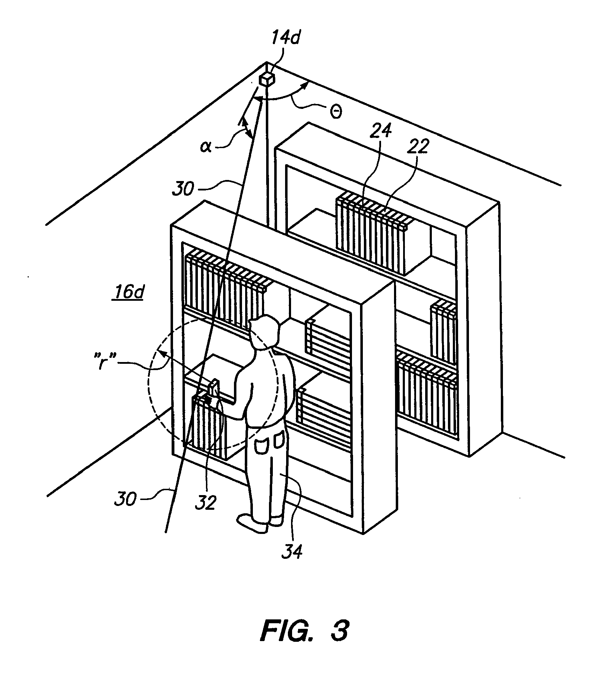

An operation of an alternate embodiment of the system 10 is indicated in Fig. 3, where it can be seen that a mobile locator 32 is being held by a user 34. As envisioned for the present invention, it may happen that the return signal 28 will unintentionally, or perhaps intentionally, not include useable distance and/or direction information. Nevertheless, the return signal 28 may still be capable of indicating the presence of an object (target) 22 within the environment 16. If so, once it is determined that an object 22 is in an environment 16, the mobile locator 32 can be moved through the environment 16 to more precisely locate the object 22.

For purposes of the present invention, it will be appreciated that the mobile locator 32 can interact with a tag 24 or an object 22 as disclosed above. It will be further appreciated by the skilled artisan, however, that any identification beacon technology known in the pertinent art could be used for this purpose. In any event, the mobile locator 32 will preferably interact directly with a tag 24, rather than with the control unit 12. With this in mind, the mobile locator 32 can typically have a limited range "r" that will be around three to five feet from the locator 32, or less. Further, the locator 32 can be controlled to vary the distance "r" within this range. The purpose here is to allow for incremental decrements in the range "r" that will help the user 34 to effectively reduce the search distance. For example, once the environment 16d has been identified as being the environment 16 wherein the object 22 is located, the user 34 can take the mobile locator 32 into the environment 16d. There the user 34 can operate the mobile locator 32 with the assurance that the object 22 is present. The user 34 then moves through the environment 16d until the mobile locator 32 indicates the object 22 is within the range "r". Subsequently, the locator 32 can be controlled to decrease the range "r" for the purpose of obtaining more precise information on the whereabouts of the object 22.

While the particular Information Locator as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. A system for interrogating a plurality of defined environments to locate an object in an environment, the system comprising:
a plurality of transmitters, with each transmitter positioned at a location in a respective environment to selectively transmit an interrogation signal in to the environment;
a plurality of receivers, with each receiver being positioned substantially adjacent a respective transmitter in each environment to receive a return signal from the identification tag in response to the interrogation signal;
a central control unit electronically connected to each transmitter and to each receiver for transmitting the interrogation signal and receiving the return signal to identify the environment where the object is located; and
a mobile locator for operating in the environment of the object to electronically interact with the identification tag to establish a precise location of the object in the environment.

2. A system as recited in claim 1 wherein the return signal includes identifying information pertinent to the object.

3. A system as recited in claim 1 or 2 wherein the identification tag is programmable to change the identifying information.

4. A system as recited in any preceding claim wherein the object is selected from a group consisting of a patient chart, personnel file, a person and a mobile structure.

5. A system as recited in any preceding claim wherein the mobile locator is hand-held and interacts with the identification tag when the locator is within a predetermined distance from the tag to locate the object, and wherein the locator can be controlled to vary the predetermined distance within a range less than about five feet.

6. A system as recited in any preceding claim wherein the return signal is reflected from the identification tag and includes direction and distance data for the object relative to the transmitter.

7. A system for interrogating a plurality of environments to identify an environment wherein an object is located, the system comprising:
a tag mounted on the object;
a means for transmitting an interrogation signal from a location in the environment;
a means for receiving a return signal from the tag, wherein the return signal is established by the tag in response to the interrogation signal being incident on the tag, and further wherein the return signal includes direction and distance data for the object relative to the location transmitting means; and;
a control means for selectively transmitting the interrogation signal and for receiving the return signal to locate the environment of the object.

8. A system as recited in claim 7 further comprising a mobile locator for operating in the environment of the object to electronically interact with the identification tag to establish a precise location of the object in the environment.

9. A system as recited in claim 7 or 8 wherein the direction information includes and azimuth angle θ and an elevation angle α.

10. A system as recited in any preceding claim the transmitting means and the receiving means are combined to function as a transceiver.

11. A system as recited in any of claims 7 to 10 further comprising a plurality of environments with a respective transmitting means and receiving means for each environment.

12. A system as recited in any preceding claim wherein the interrogation signal is transmitted at an inaudible high frequency.

13. A system as recited in any preceding claim wherein the identification tag includes an emitter responsive to the interrogation signal to emit the return signal.

14. A method for interrogating a plurality of environments to locate an object having an identification tag affixed thereon, the method comprising the steps of;
selectively transmitting an interrogation signal from a location into a respective environment wherein the interrogation signal has an inaudible high frequency;
receiving a return signal from the tag, wherein the return signal is established by the tag in response to the interrogation signal being incident on the tag, and
further wherein the return signal includes direction and distance data for the object relative to the location of the transmitting means to locate the object, and the return signal includes identifying information to identify the object; and
operating a mobile locator in the environment to electronically interact with the identification tag to establish a precise location of the object in the environment.

15. A method as recited in any preceding claim wherein the return signal is reflected from the identification tag.

16. A method as recited in claim 14 or 15 further comprising the step of controlling the mobile locator to vary a range wherein the mobile locator will electronically interact with the identification tag.
